# EUROPEAN PATENT APPLICATION

(11) **EP 4 534 615 A1**
(43) Date of publication of application: **09.04.2025**
(21) Application number: 23815532.9
(22) Date of filing: 22.03.2023
(51) Int. Cl.: C09D 11/101, C09D 11/322, B41M 5/00, B41J 2/01, B41J 2/18

(54) **ULTRAVIOLET CURABLE INK, METHOD FOR FORMING CURED PRODUCT, CURED PRODUCT, AND APPARATUS FOR FORMING CURED PRODUCT**

(30) Priority: 30.05.2022 JP 2022087969
(71) Applicant: KONICA MINOLTA, INC., Tokyo 100-7015 (JP)
(72) Inventor: MORI, Hisashi, Tokyo 100-7015 (JP); MIYANO, Masashi, Tokyo 100-7015 (JP)
(74) Representative: MFG Patentanwälte Meyer-Wildhagen Meggle-Freund Gerhard PartG mbB
(86) International application number: PCT/JP2023/011326
(87) International publication number: WO 2023/233770

(57) **Abstract**

The present invention relates to an ultraviolet curable ink which is capable of suppressing yellowing and a decrease in the luminance of a cured product formed therefrom, and which is also capable of suppressing a decrease in the curability of the cured product. The ultraviolet curable ink contains a photopolymerizable compound, a light-accumulating pigment which emits light having a wavelength of 405 nm, and a photopolymerization initiator which has an absorption coefficient of 100 mL/g·cm or more for light having a wavelength of 405 nm; and the content of the photopolymerization initiator is 0.1% by mass to 1.5% by mass relative to the total mass of the photopolymerizable compound.

## Description

### Technical Field

The present invention relates to an ultraviolet curable ink, a method for forming a cured product (cured product forming method), a cured product, and an apparatus for forming a cured product (cured product forming apparatus).

### Background Art

As ink used in the printing field, ultraviolet curable ink containing a photopolymerizable compound is known. When the ultraviolet curable ink is irradiated with ultraviolet rays, the ultraviolet curable ink can be cured by polymerization of the photopolymerizable compound to form a printed matter. Since the printed matter formed by the ultraviolet curable ink is excellent in fastness, it can be used for outdoor signboards and the like.

However, when a printed material formed with the above-described ink is used for an outdoor signboard or the like, the printed portion is less likely to be visually recognized in a dark place at night, and therefore, there has been a demand for increasing the brightness of the printed portion.

As an ink that can increase the brightness of a printed portion, for example, an ink containing a fluorescent brightener is known, as in PTL 1. An optical brightener can absorb light of a specific wavelength and emit light of a wavelength different from the wavelength of the absorbed light. However, since the fluorescent brightener also immediately stops emitting light when the irradiation of light is stopped, the brightness can be increased only while the ink is irradiated with light from the light source.

Therefore, there are increasing expectations for increasing the visibility of a printed portion even while the ink is not irradiated with light, and development of an ink capable of achieving this has been advanced.

As such an ink, an ultraviolet curable ink containing a phosphorescent pigment and a polymerizable compound is known (e.g., PTLs 2 and 3). Phosphorescent pigments can absorb light of a specific wavelength and store the energy of the light. Then, the energy of the light accumulated in the phosphorescent pigment is emitted for a long time as light having a wavelength different from that of the absorbed light even after the absorption of the light is stopped. As a result, for example, when a printed matter formed using an ink containing the phosphorescent pigment is used outdoors, the phosphorescent pigment can absorb light such as sunlight and accumulate light energy to emit light even at night. Therefore, a printed portion can be visually recognized even in a dark place.

### Citation List

### Patent Literature

PTL 1
   Japanese Unexamined Patent Publication No. 2011-174076
PTL 2
   Japanese Unexamined Patent Publication No. 2014-028484
PTL 3
   Japanese Unexamined Patent Publication No. 2005-205258

### Summary of Invention

### Technical Problem

As in PTLs 2 and 3, an ultraviolet curable ink containing a phosphorescent pigment is known. However, according to the present inventors, when a cured product is formed using the ultraviolet curable ink containing the phosphorescent pigment described in PTLs 2 and 3, there is a problem in that yellowing occurs, and further, the brightness of the cured product decreases.

As a result of investigation by the present inventors, it has been found that when the amount of the photopolymerization initiator added to the ink increases, yellowing tends to occur.

However, when the addition amount of the photopolymerization initiator is reduced in order to suppress the yellowing, there has been a problem that the polymerization of the polymerizable compound contained in the ink does not sufficiently proceed, and the curability of the cured product decreases.

The present invention has been made in view of the above circumstances, and an object of the present invention is to provide an ultraviolet curable ink containing a phosphorescent pigment, which can suppress the occurrence of yellowing and a decrease in brightness of a cured product to be formed and can suppress a decrease in curability of the cured product, and a cured product forming method, a cured product, and a cured product forming apparatus using the ultraviolet curable ink.

### Solution to Problem

An aspect of the present invention for solving the above-described problem relates to the following ultraviolet curable ink described in [1] to [12].
[1] An ultraviolet curable ink, containing: a photopolymerizable compound; a phosphorescent pigment that emits light having a wavelength of 405 nm; and a photopolymerization initiator having an extinction coefficient of 100 mL/g·cm or more for the light having the wavelength of 405 nm, wherein
   a content of the photopolymerization initiator is 0.1% by mass or more and 1.5% by mass or less based on a total mass of the photopolymerizable compound.
[2] The ultraviolet curable ink according to [1], wherein the ultraviolet curable ink is an inkjet ink.
[3] The ultraviolet curable ink according to [1] or [2], further comprising a polymerization inhibitor.
[4] The ultraviolet curable ink according to any one of [1] and [3], wherein the phosphorescent pigment has a particle diameter (d50), at which a cumulative value in a volume-based particle diameter distribution is 50%, of 1 µm or more and 10 µm or less.
[5] The ultraviolet curable ink according to any one of [1] and [4], wherein a content of the phosphorescent pigment is less than 50% by mass based on a total mass of the ultraviolet curable ink.
[6] The ultraviolet curable ink according to any one of [1] and [5], wherein the phosphorescent pigment is a phosphorescent pigment in which strontium aluminate is activated with an activator.
[7] The ultraviolet curable ink according to any one of [1] and [6], wherein the photopolymerization initiator is an intramolecular cleavage-type photopolymerization initiator.
[8] The ultraviolet curable ink according to any one of [1] and [7], wherein the extinction coefficient of the photopolymerization initiator is 500 mL/g·cm or more.

In addition, an aspect of the present invention for solving the above-described problems relates to a cured product forming method of the following [9] to [11].
[9] A method for forming a cured product, the method including: applying the ultraviolet curable ink according to any one of [1] and [8] onto a base material; and irradiating the applied ultraviolet curable ink with an ultraviolet ray.
[10] The method according to [9], further including: further applying the ultraviolet curable ink onto the ultraviolet curable ink having been irradiated with the ultraviolet ray; and irradiating the further applied ultraviolet curable ink with the ultraviolet ray.
[11] The method according to [9] or [10], wherein, in the applying the ultraviolet curable ink onto the base material, the ultraviolet curable ink is ejected from a nozzle of an inkjet head to apply the ultraviolet curable ink onto the base material; and the method further includes: discharging, from the inkjet head, the ultraviolet curable ink that has not been ejected from the nozzle of the inkjet head, and resupplying the discharged ultraviolet curable ink to the inkjet head.

In addition, an aspect of the present invention for solving the above problems relates to a cured product of the following [12] and [13].
[12] A cured product obtained by curing the ultraviolet curable ink according to any one of [1] and [8].
[13] The cured product according to [12], wherein the cured product has a thickness of 0.3 mm or more.

In addition, an aspect of the present invention for solving the above-described problems relates to a cured product forming apparatus of the following [14] and [15].
[14] An apparatus for forming a cured product, the apparatus including: an ink applicator that applies the ultraviolet curable ink according to any one of [1] and [8] onto a base material; and an LED light source that irradiates the ultraviolet curable ink with an ultraviolet ray.
[15] The apparatus according to [14], wherein: the ink applicator is an inkjet head that ejects the ultraviolet curable ink; and the ultraviolet curable ink that has not been ejected from the inkjet head is discharged from the inkjet head, and the discharged ultraviolet curable ink is resupplied to the inkjet head.

### Advantageous Effects of Invention

The present invention provides an ultraviolet curable ink containing a phosphorescent pigment, the ultraviolet curable ink being capable of further suppressing the occurrence of yellowing and a decrease in brightness of a cured product to be formed, and being capable of suppressing a decrease in curability of the cured product, a cured product forming method using the same, a cured product, and a cured product forming apparatus.

### Brief Description of the Drawings

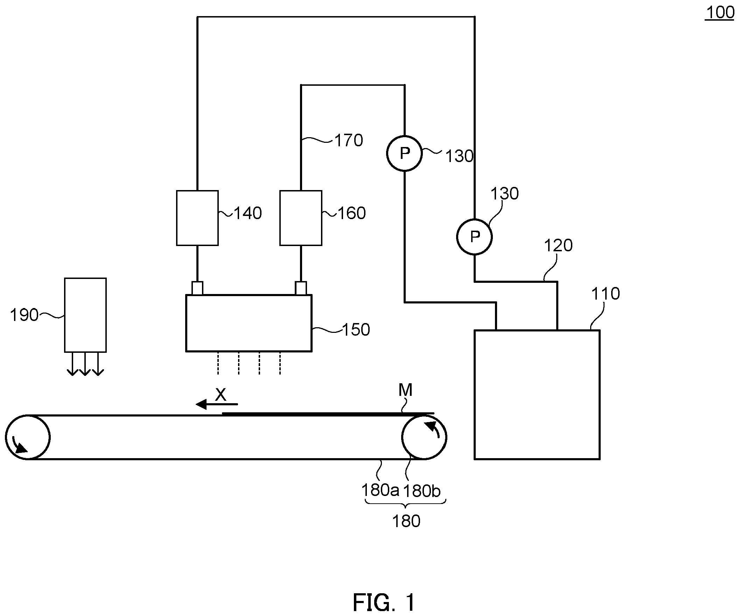

Fig. 1 is a schematic diagram illustrating a configuration of a cured product forming apparatus according to an embodiment of the present invention.

### Description of Embodiments

Hereinafter, an embodiment of the present invention will be described in detail. Note that the present invention is not limited to the following forms.

### 1 Ultraviolet curable ink

The ultraviolet curable ink (hereinafter, also simply referred to as "ink") according to the embodiment includes an ultraviolet polymerizable compound, a phosphorescent pigment, and a photopolymerization initiator. The ink is preferably inkjet ink.

As described above, when the active ray-curable ink containing the phosphorescent pigment described in PTL 2 or 3 is used, yellowing has occurred in the cured product. When yellowing occurred in the cured product, not only the appearance becomes poor, but also the brightness of the cured product decreases. It is considered that this is because light emission of the phosphorescent pigment is concealed by the yellowed portion.

As a result of investigation by the present inventors, it has been found that when the amount of a photopolymerization initiator added to an ink containing a phosphorescent pigment is large, yellowing of a cured product is more likely to occur. This is considered to be because the residue of the photopolymerization initiator present in the cured product has a molecular structure having a covalent bond such as benzene, which is a mother nucleus capable of absorbing ultraviolet rays. That is, it is considered that since the mother nucleus absorbs ultraviolet rays, a large amount of yellow corresponding to a wavelength which is not absorbed becomes visible, and thus yellowing occurs. On the other hand, when the amount of the photopolymerization initiator added is attempted to be reduced in order to suppress the yellowing of the cured product due to the residue of the photopolymerization initiator, the polymerization of the polymerizable compound in the ink did not sufficiently proceed, and the curability of the cured product was lowered.

Incidentally, in a cured product formed from an ink containing a non-phosphorescent pigment (e.g., an ink for image formation), yellowing occurring in the cured product is less likely to be visually recognized due to coloring by the pigment. On the other hand, for an ink containing a phosphorescent pigment, a non-phosphorescent pigment is not added, or even when added, the amount thereof is small, in order to increase the transparency of a cured product to further increase the brightness. Therefore, yellowing of the cured product is easily noticeable. In addition, since the transparency is increased, when yellowing occurs in the cured product, not only yellowing in the vicinity of the surface of the cured product but also yellowing in the inside of the cured product closer to the base material is more likely to be visually recognized, and thus appearance defects are more likely to occur. Then, when the yellowing occurs, the light emission of the phosphorescent pigment is concealed by the yellowed part, and the brightness decreases. Therefore, the problem of yellowing of a cured product particularly occurs in an ink containing a phosphorescent pigment.

As a result of extensive studies on these problems, the inventors of the present invention have found that by using an ultraviolet curable ink containing a phosphorescent pigment that emits light having a wavelength of 405 nm and a photopolymerization initiator having an extinction coefficient of 100 mL/g·cm or more for a wavelength of 405 nm, it is possible to reduce the amount of the photopolymerization initiator to be added and to suppress a decrease in curability while suppressing yellow discoloration and a decrease in brightness.

When such an ultraviolet curable ink is irradiated with ultraviolet rays, the photopolymerization initiator in the ink absorbs part of the ultraviolet rays to start polymerization of the polymerizable compound, thereby curing the ink. On the other hand, a part of the ultraviolet rays applied to the ink is absorbed by the phosphorescent pigment. The phosphorescent pigment that has absorbed the ultraviolet rays emits the light having the wavelength of 405 nm in the cured product for a long time. At this time, the photopolymerization initiator that remains in the cured product and has an extinction coefficient of 405 nm/g·cm or more at a wavelength of 100 mL easily absorbs light emitted from the phosphorescent pigments. Therefore, it is considered that the polymerization reaction of the unreacted polymerizable compound can be further started.

In this way, in addition to the curing of the ink by the irradiation of ultraviolet rays, the curing of the ink by the light emission of the phosphorescent pigment occurs, and thus it is possible to increase the curability of the cured material. In addition, since the light emission of the phosphorescent pigment occurs inside the cured product, the curing of the ink can proceed more efficiently. This is considered to be because the polymerization reaction is less likely to be influenced by oxygen inhibition. For these reasons, it is considered that even when the addition amount of the photopolymerization initiator is reduced, a decrease in the curability can be suppressed.

Then, the present inventors have found that when the amount of the photopolymerization initiator to be added is 0.1% by mass or more and 1.5% by mass or less, yellowing of the cured product and a decrease in brightness can be suppressed.

### 1-1. Photopolymerizable compound

The photopolymerizable compound contained in the ink according to the present embodiment is a compound that polymerizes and crosslinks by irradiation with ultraviolet rays.

Examples of the photopolymerizable compound include a radically polymerizable compound and a cationically polymerizable compound. Among these, the photopolymerizable compound is preferably a radically polymerizable compound. The photopolymerizable compound may be any of a monomer, a polymerizable oligomer, and a mixture thereof. Only one type of photopolymerizable compound may be contained in the ink, or two or more types thereof may be contained in combination.

Furthermore, the photopolymerizable compound may be monofunctional or polyfunctional. From the viewpoint of further enhancing the curability of the cured product, the photopolymerizable compound preferably includes a polyfunctional compound.

The radically polymerizable compound is a monofunctional or polyfunctional compound having a radically polymerizable ethylenically unsaturated bond in the molecule. Examples of the compound having a radically polymerizable ethylenically unsaturated bond include an unsaturated carboxylic acid and a salt thereof, an unsaturated carboxylic acid ester compound, an unsaturated carboxylic acid urethane compound, an unsaturated carboxylic acid amide compound and an anhydride thereof, acrylonitrile, styrene, an unsaturated polyester, an unsaturated polyether, an unsaturated polyamide, and an unsaturated urethane. Examples of the unsaturated carboxylic acid include (meth)acrylic acid, itaconic acid, crotonic acid, isocrotonic acid, and maleic acid.

The radically polymerizable compound is preferably an unsaturated carboxylic acid ester and a (meth)acrylate; more preferably a (meth)acrylate.

Examples of the monofunctional (meth)acrylate include isoamyl (meth)acrylate, stearyl (meth)acrylate, isobornyl (meth)acrylate, lauryl (meth)acrylate, octyl (meth)acrylate, decyl (meth)acrylate, isomyristyl (meth)acrylate, isostearyl (meth)acrylate, 2-phenoxyethyl (meth)acrylate, 2-ethylhexyl-diglycol (meth)acrylate, 2-hydroxybutyl (meth)acrylate, 2-(meth)acryloyloxyethylhexahydrophthalic acid, butoxyethyl (meth)acrylate, ethoxydiethylene glycol (meth)acrylate, methoxydiethylene glycol (meth)acrylate, methoxypolyethylene glycol (meth)acrylate, methoxypropylene glycol (meth)acrylate, phenoxyethyl (meth)acrylate, tetrahydrofurfuryl (meth)acrylate, isobornyl (meth)acrylate, 2-hydroxyethyl (meth)acrylate, 2-hydroxypropyl (meth)acrylate, 2-hydroxy-3-phenoxypropyl (meth)acrylate, 2-(meth)acryloyloxyethylsuccinic acid, 2-(meth)acryloyloxyethylphthalic acid, 2-(meth)acryloyloxyethyl-2-hydroxyethyl-phthalic acid and t-butylcyclohexyl (meth)acrylate.

Examples of the polyfunctional (meth)acrylate include bifunctional (meth)acrylates including triethylene glycol di(meth)acrylate, tetraethylene glycol di(meth)acrylate, polyethylene glycol di(meth)acrylate, tripropylene glycol di(meth)acrylate, polypropylene glycol di(meth)acrylate, 1,4-butanediol di(meth)acrylate, 1,6-hexanediol di(meth)acrylate, 1,9-nonanediol di(meth)acrylate, neopentyl glycol di(meth)acrylate, tricyclodecanedimethanol diacrylate, dimethylol-tricyclodecane di(meth)acrylate, bisphenol A-type di(meth)acrylate, hydroxypivalic neopentyl glycol di(meth)acrylate, polytetramethylene glycol di(meth)acrylate, polyethylene glycol diacrylate, dipropylene glycol diacrylate and tripropylene glycol diacrylate; and oligomers having a (meth)acryloyl group, including three or more functional (meth)acrylates including trimethylolpropane tri (meth)acrylate, pentaerythritol tri (meth)acrylate, pentaerythritol tetra (meth)acrylate, dipentaerythritol hexa (meth)acrylate, ditrimethylolpropane tetra (meth)acrylate, glycerolpropoxy tri (meth)acrylate, and pentaerythritol ethoxy tetra (meth)acrylate, and polyester acrylate oligomers.

Examples of the cationically polymerizable compound include an epoxy compound, a vinyl ether compound, and an oxetane compound.

Examples of the epoxy compound include cycloaliphatic epoxy resins such as 3,4-epoxycyclohexylmethyl-3',4'-epoxycyclohexanecarboxylate, bis(3,4-epoxycyclohexylmethyl) adipate, vinylcyclohexene monoepoxide, ε-caprolactone-modified 3,4-epoxycyclohexylmethyl, 3',4'-epoxycyclohexanecarboxylate, 1-methyl-4-(2-methyloxiranyl)-7-oxabicyclo [4,1,0] heptane, 2-(3,4-epoxycyclohexyl-5,5-spiro-3,4-epoxy) cyclohexanone-meta-dioxane and bis(2,3-epoxycyclopentyl) ether; aliphatic epoxy compounds such as diglycidyl ether of 1,4-butanediol, diglycidyl ether of 1,6-hexanediol, triglycidyl ether of glycerin, triglycidyl ether of trimethylolpropane, diglycidyl ether of polyethylene glycol, diglycidyl ether of propyleneglycol, and polyglycidyl ethers of polyetherpolyols obtained by adding one or more alkylene oxides (ethylene oxides, propylene oxides, and the like) to aliphatic polyhydric alcohols such as ethylene glycol, propylene glycol, and glycerin; and aromatic epoxy compounds such as di- or polyglycidyl ethers of bisphenol A or alkylene oxide adducts thereof, di-or polyglycidyl ethers of hydrogenated bisphenol A or alkylene oxide adducts thereof, and novolac-type epoxy resins.

Examples of the vinyl ether compound include monovinyl ether compounds such as ethyl vinyl ether, N-butyl vinyl ether, isobutyl vinyl ether, octadecyl vinyl ether, cyclohexyl vinyl ether, hydroxybutyl vinyl ether, 2-ethylhexyl vinyl ether, cyclohexanedimethanol monovinyl ether, N-propyl vinyl ether, isopropyl vinyl ether, isopropenyl ether-o-propylene carbonate, dodecyl vinyl ether, diethylene glycol monovinyl ether, and octadecyl vinyl ether; and di-or trivinyl ether compounds such as ethylene glycol divinyl ether, diethylene glycol divinyl ether, triethylene glycol divinyl ether, propylene glycol divinyl ether, dipropylene glycol divinyl ether, butanediol divinyl ether, hexanediol divinyl ether, cyclohexanedimethanol divinyl ether, and trimethylolpropane trivinyl ether.

Examples of the oxetane compound include 3-hydroxymethyl-3-methyloxetane, 3-hydroxymethyl-3-ethyloxetane, 3-hydroxymethyl-3-propyloxetane, 3-hydroxymethyl-3-n-butyloxetane, 3-hydroxymethyl-3-phenyloxetane, 3-hydroxymethyl-3-benzyloxetane, 3-hydroxyethyl-3-methyloxetane, 3-hydroxyethyl-3-ethyloxetane, 3-hydroxyethyl-3-propyloxetane, 3-hydroxyethyl-3-phenyloxetane, 3-hydroxypropyl-3-methyloxetane, 3-hydroxypropyl-3-ethyloxetane, 3-hydroxypropyl-3-propyloxetane, 3-hydroxypropyl-3-phenyloxetane, 3-hydroxybutyl-3-methyloxetane, 1, 4 bis {[(3-ethyl-3-oxetanyl) methoxy] methyl} benzene, 3-ethyl-3-(2-ethylhexyloxymethyl) oxetane, and di[1-ethyl (3-oxetanyl)] methyl ether.

The molecular weight of the photopolymerizable compound is preferably 1,000 or less, and more preferably 600 or less. When the molecular weight is 1,000 or less, the viscosity of the ink can be further reduced, and the ejection stability can be further improved when the ink is used as an inkjet ink. The lower limit of the molecular weight is not particularly limited, but is preferably 200 or more.

Among the photopolymerizable compounds having a molecular weight of 1,000 or less, a photopolymerizable compound having an alkyleneoxide structure or an aromatic ring, such as dipropylene glycol di(meth)acrylate, tripropylene glycol di(meth)acrylate, diethylene glycol diacrylate, triethylene glycol di(meth)acrylate, tetraethylene glycol di(meth)acrylate, 2-phenoxyethyl (meth)acrylate, or bisphenol A-type di(meth)acrylate, is preferable. According to the finding by the present inventors, these are more likely to increase the transparency of a cured product formed with the ink.

The content of the photopolymerizable compound can be set to, for example, 1% by mass or more and 95% by mass or less based on the total mass of the ink, and is preferably 30% by mass or more and 95% by mass or less and more preferably 50% by mass or more and 95% by mass or less.

### 1-2. Phosphorescent pigment

In the present embodiment, the ink contains a phosphorescent pigment.

A phosphorescent pigment can absorb light having a predetermined wavelength to accumulate energy of the light, and even after the absorption of the light is stopped, the phosphorescent pigment can release the accumulated energy of the light as light having a wavelength different from that of the absorbed light for a long time. That is, the phosphorescent pigment can emit phosphorescence.

In the present embodiment, the phosphorescent pigment emits light having a wavelength of 405 nm. In the present specification, the expression "emits light having a wavelength of 405 nm" means that the phosphorescent pigment has an emission spectrum in which the emission intensity at a wavelength of 405 nm is 0.1% or more of the emission intensity at the maximum emission wavelength.

From the viewpoint of causing a photopolymerization initiator described later to absorb light emitted from the phosphorescent pigment to further promote a polymerization reaction, the emission intensity at the wavelength of 405 nm is preferably 0.15% or more of the emission intensity at the maximum emission wavelength, and more preferably 0.2% or more. The emission intensity falling within the above range can further enhance the curability of the ink. The upper limit of the emission intensity is not particularly limited, but for example, is 80% or less of the emission intensity at the maximum emission wavelength.

The emission intensity of the phosphorescent pigment can be measured by, for example, a fluorescence spectrophotometer (F-7000, manufactured by Hitachi High-Tech Science Corp.). In the above measurement, the wavelength of the phosphorescent pigment excitation light is appropriately selected in accordance with the type of the phosphorescent pigment.

The type of the phosphorescent pigment is not particularly limited as long as it has the above-described characteristics. Examples of the phosphorescent pigment include a phosphorescent pigment obtained by subjecting a mother crystal which is a metal compound to an activation treatment with an activator.

Examples of the host crystal include sulfides such as zinc sulfide, calcium sulfide, germanium sulfide, strontium sulfide, and yttrium sulfide; metal oxides such as calcium oxide, strontium oxide, barium oxide, alumina, and cerium oxide; aluminates such as calcium aluminate, strontium aluminate, and barium aluminate; and strontium aluminum silicate. Among these, strontium aluminate, strontium aluminum silicate, and the like are preferable.

Examples of the activator for activating the base crystal include europium, terbium, yttrium, zirconium, dysprosium, neodymium, manganese, magnesium, cobalt, titanium, copper, and barium. Among these, europium, dysprosium, and neodymium are preferable.

Only one type of phosphorescent pigment may be contained in the ink or two or more types thereof may be contained in combination in the ink.

The maximum absorption wavelength in the absorbing spectrum of the phosphorescent pigments is preferably 280 nm or more and 380 nm or less, and more preferably 300 nm or more and 360 nm or less. When the peak wavelength of the absorption spectrum of the phosphorescent pigment is in the above range, the emission intensity of the phosphorescent pigment at the wavelength of 405 nm is more likely to be included in the above preferable range.

The maximum absorption wavelength of the phosphorescent pigment can be measured with, for example, a fluorescence spectrophotometer (F-7000, manufactured by Hitachi High-Tech Corp.).

The peak wavelength (maximum emission wavelength) in the emission spectrum of the phosphorescent pigments is preferably 400 nm or more and 700 nm or less, more preferably 400 nm or more and 550 nm or less. When the peak wavelength of the emission spectrum of the phosphorescent pigment is within the above-described range, the emission intensity of the phosphorescent pigment at the wavelength of 405 nm tends to be a value within the above-described preferable range.

The peak wavelength of the emission spectrum of the phosphorescent pigment can be measured by, for example, a fluorescence spectrophotometer (F-7000, manufactured by Hitachi High-Tech Corp.).

The particle diameter (d50) at which the cumulative value in the volume-based particle diameter distribution of the phosphorescent pigments is 50% is preferably 1 µm or more and 10 µm or less, and more preferably 1 µm or more and 5 µm or less. When the particle diameter is 1 µm or more, the cured product is less likely to be affected by Mie scattering, and scattering of light emitted from the phosphorescent pigment in the cured product can be further suppressed to further increase the brightness of the cured product. In addition, by further suppressing scattering of light emitted from the phosphorescent pigment, the light can be sufficiently absorbed by the photopolymerization initiator, and the curability of the cured product can be further enhanced. When the particle diameter is 10 µm or less, a reduction in ejection stability can be more limited when the ink is used as an inkjet ink.

The particle diameter of the phosphorescent pigment can be measured by a particle diameter distribution analyzer (for example, LUMiSizer, manufactured by LUM Japan Co., Ltd.) using the Stokes sedimentation method.

The content of the phosphorescent pigment is preferably less than 50% by mass, and preferably 20% by mass or more and less than 50% by mass based on the total mass of the ink. When the content is less than 50% by mass, the ratio of the photopolymerizable compound in the ink can be increased to further improve the curability of the cured product and the adhesion to the base material. In addition, when the content is less than 50% by mass, it is possible to suppress a decrease in ejection stability when the ink is used as an inkjet ink. If the content is 20% by mass or more, the brightness of the cured product can be further improved.

### 1-3. Photopolymerization initiator

In the present embodiment, the ink contains a photopolymerization initiator having an extinction coefficient of 405 nm/g·cm or more for light of wavelengths 100 mL.

As described above, since the photopolymerization initiator is contained in the ink, a curing reaction can be further accelerated in the inside of the ink by the luminescence of the phosphorescent pigment, and therefore, the amount of the photopolymerization initiator to be added can be reduced. As a result, yellowing of the cured product derived from the photopolymerization initiator can be suppressed, and the brightness of the cured product can be further increased.

From the viewpoint of further improving the curability of the cured product, the extinction coefficient of the photopolymerization initiator is preferably 100 mL/g·cm or more and 10000 mL/g·cm or less, and more preferably 500 mL/g·cm or more and 1000 mL/g·cm or less.

The extinction coefficient of the photopolymerization initiator can be measured by, for example, using a spectrophotometer (manufactured by JASCO Corporation, V650) for a liquid obtained by diluting the photopolymerization initiator with methanol so that the concentration is in the range of 0.1% by mass to 0.5% by mass.

The photopolymerization initiator can be a radical initiator when the ink contains a radically polymerizable compound, and can be a cationic initiator (photoacid generator) when the ink contains a cationically polymerizable compound.

Examples of the radical polymerization initiator include an intramolecular cleavage-type photopolymerization initiator and a hydrogen abstraction-type polymerization initiator. Only one type of radical polymerization initiator may be contained in the ink or two or more types thereof may be contained in combination.

Examples of the intramolecular cleavage-type photopolymerization initiator include Irgacure 819 (extinction coefficient: 9.0 × 10² mL/g·cm), Irgacure 784 (extinction coefficient: 1.2 × 10³ mL/g·cm), Irgacure 379 (extinction coefficient: 2.8 × 10² mL/g·cm), and Irgacure 369 (extinction coefficient: 2.8 × 10² mL/g·cm) (all manufactured by BASF), and Omnirad TPO (extinction coefficient: 1.6 × 10² mL/g·cm, manufactured by IGM Resins Co., Ltd.). (The "extinction coefficient" represents the extinction coefficient of light of a wavelength of 405 nm).

Examples of the hydrogen abstraction-type photopolymerization initiator include Omnirad ITX (Extinction coefficient: 1.7× 10³ mL/g·cm, manufactured by IGM Resins) and the like.

In the present embodiment, the photopolymerization initiator is preferably an intramolecular cleavage-type photopolymerization initiator. In the intramolecular cleavage-type photopolymerization initiator, the number of mother nuclei capable of absorbing ultraviolet rays contained in one molecule of the residue of the photopolymerization initiator is smaller than that in the hydrogen abstraction-type photopolymerization initiator. Therefore, it is considered that yellowing of the cured product is less likely to occur. In addition, the intramolecular cleavage-type photopolymerization initiator can further enhance the curability of the cured product.

Examples of the cationic photopolymerization initiator include a photoacid generator. Examples of the photoacid generator include B(C₆F₅)₄ , PF₆, AsF₆, SbF₆, CF₃SO₃ salts of aromatic onium compounds including diazonium, ammonium, iodonium, sulfonium, phosphonium and the like, sulfonated products that generate sulfonic acid, halides that generate hydrogen halide by light, and iron-allene complexes.

The maximum absorption wavelength in the absorbance spectrum of the photopolymerization initiator is preferably 250 nm or more and 420 nm or less, more preferably 280 nm or more and 400 nm or less. When the peak wavelength of the photopolymerization initiator is within the above range, the light emitted from the above-described phosphorescent pigment can be more easily absorbed, and the curability of the ink can be more enhanced.

The maximum absorption wavelength of the absorbance spectrum of the photopolymerization initiator can be measured using, for example, a spectrophotometer (manufactured by JASCO Corporation, V650) on a solution obtained by diluting the photopolymerization initiator with methanol or acetonitrile such that the concentration becomes 0.1% by mass or more and 0.5% by mass or less.

In the present embodiment, the content of the photopolymerization initiator is 0.5% by mass or more and 1.5% by mass or less, more preferably 0.7% by mass or more and 1.3% by mass or less, based on the total mass of the photopolymerizable compounds. When the content is 0.5% by mass or more, the curability of the cured product can be enhanced, and when the content is 1.5% by mass or less, the yellowing of the cured product can be suppressed to enhance the brightness.

In the present embodiment, the ink may contain a photopolymerization initiator having an extinction coefficient of less than 100 mL/g·cm, to the extent that the effects of the present invention are exhibited.

Examples of the photopolymerization initiator having an extinction coefficient of less than 100 mL/g·cm include Irgacure 127 (extinction coefficient: 7.0 mL/g·cm, manufactured by BASF), Omnirad MBF (extinction coefficient: 0.1 mL/g·cm or less, manufactured by IGM Resins), and the like.

The content of the photopolymerization initiator having an extinction coefficient of less than 100 mL/g·cm can be, for example, 0.3% by mass or more and 1.3% by mass or less based on the total mass of the photopolymerizable compound, and is preferably less than 1.3% by mass and more preferably less than 1% by mass from the viewpoint of brightness improvement and yellow discoloration.

### 1-4. Polymerization inhibitor

In the present embodiment, the ink may contain a polymerization inhibitor.

When the ink contains a polymerization inhibitor, a decrease in the ejection stability can be further suppressed in a case where the ink is used as an inkjet ink. This is because the ultraviolet ray for curing the ink slightly reaches a small amount of ink remaining in the inkjet head nozzle, and curing of the ink around the nozzle can be suppressed by the polymerization inhibitor.

However, according to the studies of the present inventors, when a polymerization inhibitor is contained in an ink together with a photopolymerization initiator, yellowing may occur depending on the amount of the photopolymerization initiator added. The reason for this phenomenon is not clear, but it is considered that yellowing is further caused by a reaction product between a residue of the photopolymerization initiator present in the cured product and the polymerization inhibitor.

On the other hand, in the present invention, when the photopolymerization initiator is used, the addition amount thereof can be reduced while the curability of the cured product is enhanced. Therefore, it is possible to suppress the generation of the reaction product caused by the combined use of the polymerization inhibitor and the photopolymerization initiator, and to suppress the occurrence of yellowing.

Examples of the polymerization inhibitor include N-oxyl-based polymerization inhibitor, a phenol-based polymerization inhibitor, a quinone-based polymerization inhibitor, an amine-based polymerization inhibitor, and a copper-based dithiocarbamate polymerization inhibitor. Only one type of polymerization inhibitor may be contained in the ink, or two or more types thereof may be contained in combination.

Examples of the N-oxyl-based polymerization inhibitor include 4-hydroxy-2,2,6,6-tetramethylpiperidine-N-oxyl (TEMPO), 4-hydroxy-2,2,6,6-tetramethyl-piperidine-N-oxyl, 4-oxo-2,2,6,6-tetramethyl-piperidine-N-oxyl, 4-methoxy-2,2,6,6-tetramethyl-piperidine-N-oxyl, 4-acetoxy-2,2,6,6-tetramethyl-piperidine-N-oxyl, and the like. Examples of commercially available products of the N-oxyl-based polymerization inhibitor include Irgastab UV10 (manufactured by BASF ("Irgastab" is a registered trade mark of the company)).

Examples of the phenol-based polymerization inhibitor include 2,6-di-tert-butylphenol, 2,4-di-tert-butylphenol, 2-tert-butyl 4,6-dimethylphenol, 2,6-di-tert-butyl-4-methylphenol, 2,4,6-tri-tert-butylphenol, 2,6-di-t-butyl-p-cresol (butylated hydroxytoluene: BHT), 4-methoxyphenol, 2-methoxy-4-methylphenol and the like.

Examples of the quinone-based polymerization inhibitor include and hydroquinones, methoxyhydroquinones, benzoquinones, 1,4-naphthoquinones, and p-tert-butylcatechol.

Examples of the amine-based polymerization inhibitor include alkylated diphenylamine, N,N'-diphenyl-p-phenylenediamine, and phenothiazine.

Examples of the copper dithiocarbamate-based polymerization inhibitor include copper dimethyldithiocarbamate, copper diethyldithiocarbamate, and copper dibutyldithiocarbamate.

The content of the polymerization inhibitor is preferably 0.005 mass% or more and 1 mass% or less, more preferably 0.05 mass% or more and 0.1 mass% or less.

### 1-5. Other components

The ink according to the present embodiment may further contain other such as a non-phosphorescent pigment, a pigment-dispersing agent, a surfactant, and a polymerization inhibitor, within a range where the effect of the present invention is exhibited.

Examples of the non-phosphorescent pigment include a red pigment, a yellow pigment, a blue pigment, and a white pigment, which can be used in an ink for image formation. As these pigments, known pigments can be used.

Examples of the pigment-dispersing agent include a polymer dispersant and a wetting dispersant.

The content of the pigment-dispersing agent is preferably 0.1% by mass or more and 30% by mass or less based on the total mass of the phosphorescent pigment.

Examples of the surfactant include anionic surfactants such as dialkylsulfosuccinates, alkylnaphthalenesulfonates, and fatty acid salts; nonionic surfactants such as polyoxyethylene alkyl ethers, polyoxyethylene alkyl allyl ethers, acetylene glycols, and polyoxyethylene-polyoxypropylene block copolymers; cationic surfactants such as alkylamine salts, and quaternary ammonium salts; and silicone-based or fluorine-based surfactants.

The content of the surfactant based on the total mass of the ink is not particularly limited as long as the effect of the present invention is exhibited, but for example, it can be 0.001% by mass or more and less than 1.0% by mass.

### 1-6. Physical properties

The ink according to the present embodiment preferably has a viscosity of 1 mPa·s or more at 10°C and a viscosity of 15 mPa·s or less at 90°C. When the viscosity is within the above range and the ink is used as an inkjet ink, the temperature of the head can be adjusted so that the viscosity falls within a range appropriate for inkjet ejection, thereby improving the ejection stability.

The viscosities of the ink at 10°C and 90°C can be obtained by measuring a temperature change in dynamic viscoelasticity of the ink with a rheometer. Specifically, a temperature change curve of viscosity is obtained when the ink is heated to 100°C and cooled to 25°C under conditions of a shear rate of 11.7 (1/s) and a temperature decrease rate of 0.1°C/s. The viscosity can be determined by reading the viscosity at 10°C and 90°C in the temperature change curve of the viscosity.

Stress-controlled rheometers PhysicaMCR series manufactured by Anton Paar Co., Ltd. can be used as rheometers. The cone plate may have a diameter of 75 mm and a cone angle of 1.0°.

### 1-7. Method for preparing ultraviolet curable ink

The ink according to the present embodiment can be prepared by mixing the components described above. When the ink contains a pigment-dispersing agent, a pigment dispersion liquid containing the phosphorescent pigment and the pigment-dispersing agent may be prepared in advance, and the remaining components may be added thereto and mixed. At this time, in order to increase the solubility of the pigment-dispersing agent and the like, it is preferable to prepare the pigment dispersion liquid by mixing the pigment, the dispersant, and the like while heating.

### 2. Cured product forming method

The cured product forming method according to the present embodiment includes a step of applying an ultraviolet curable ink onto a base material and a step of irradiating the applied ultraviolet curable ink with ultraviolet rays (also referred to as "ultraviolet ray irradiation step").

### 2-1. Step of applying ink

In this step, the above-described ultraviolet curable ink is applied onto the base material.

Examples of the method of applying the ink onto the base material include a method of applying the ink using a roll coater, a spin coater, or the like, a method of applying the ink by a screen printing method, and a method of applying the ink by an inkjet method. Among these methods, the inkjet method is preferable from the viewpoint of forming a cured product at a desired position on the base material more precisely.

When the ink is applied onto the base material by the inkjet method, the ink is ejected from a nozzle of an inkjet head to apply the ink onto the base material. The method of ejecting from the inkjet head may be either an on-demand method or a continuous method. The inkjet head of the on-demand system may be any of electro-mechanical transduction systems such as a single cavity type, a double cavity type, a bender type, a piston type, a share mode type, and a shared wall type, and electro-thermal transduction systems such as a thermal inkjet type and a bubble jet ("bubble jet" is a registered trademark of Canon Inc) type.

The type of the base material is not particularly limited, and examples thereof include plastic plates made of acrylic, ABS resin, polycarbonate, PMMA and the like, films made of nylon, polypropylene, polystyrene and the like, metal plate made of copper, stainless, iron, aluminum and the like, fabrics made of nylon, polyester and the like, glass plates, and ceramic tiles made of alumina titania and the like.

### 2-2. Ultraviolet ray irradiation step

In this step, the ink applied onto the base material is irradiated with ultraviolet rays to be cured. The wavelength of the ultraviolet rays to be applied may be appropriately set in accordance with the maximum absorption wavelength of the photopolymerization initiator.

The ultraviolet rays are preferably emitted from an LED light source. Since an LED has less radiant heat as compared with a conventional light source (e.g., a metal halide lamp), use of the LED makes it difficult to melt ink at the time of irradiation with ultraviolet rays, and makes it difficult to cause gloss unevenness and the like.

In this step, the wavelength of the ultraviolet rays to be applied is preferably 300 nm or more. When the wavelength of the ultraviolet ray is 300 nm or more, the curing of the ink is accelerated, and the damage to the base material is small. In particular, from the viewpoint of improving the handleability of the light source while reducing damage to the base material, the wavelength of the ultraviolet ray to be irradiated is preferably 380 nm or more. Note that when ultraviolet rays having this wavelength are applied, the phosphorescent pigment can sufficiently emit light to enhance the curability of the ink.

### 2-3. Step of discharging ink from inkjet head

The cured product forming method according to the present embodiment may further include, when the step of applying the ink onto the base material is performed using an inkjet head, a step of discharging, from the inkjet head, the ultraviolet curable ink that has not been ejected from a nozzle of the inkjet head.

In the present embodiment, in the cured product forming apparatus illustrated in Fig. 1 (described below), the present step discharges ink that has not been ejected from inkjet head 150 during the ultraviolet ray irradiation step from the ink discharge port of the inkjet head 150 through the ink discharge channel 170 to the ink storage tank 110.

### 2-4. A step of resupplying the ink to the inkjet head

The cured product forming method according to the present embodiment may further include resupplying, to the inkjet head, the ink discharged from the inkjet head in the discharging of the ink.

In the present embodiment,, in this step, the ink discharged from the inkjet head 150 and returned to the ink storage tank 110 is resupplied to the inkjet head 150 via the ink supply channel 120 by the liquid feed pump 130 in the below-described cured product forming apparatus illustrated in Fig. 1.

By repeatedly performing the step of discharging the ink and the step of resupplying the ink (performing circulation of the ink), it is possible to suppress an increase in the viscosity of the ink in the vicinity of the nozzles due to sedimentation or aggregation of the phosphorescent pigment in the ink, and it is possible to easily increase the ejection stability.

The step of discharging the ink and the step of resupplying the ink may be performed after the step of applying the ink, and may be performed in parallel with the above ultraviolet ray irradiation step, the step of further applying ink (described later), and/or the step of irradiating the ink applied onto the ink with ultraviolet rays (described below).

### 2-5. Step of further applying ink

The cured product forming method according to the exemplary embodiment may further include a step of applying an ink onto the ink having been irradiated with the ultraviolet rays.

The method of further applying the ink may be the same method as or different from the method of applying the ink onto the base material used in the step of applying the ink.

### 2-6. Step of irradiating ink applied onto ink with ultraviolet rays

The cured product forming method according to the present embodiment may further include a step of irradiating the further applied ink with ultraviolet rays.

In the present step, in the step of further applying the ink, the further applied ink is irradiated with ultraviolet rays to cure the ink.

The wavelength in the case of using ultraviolet rays can be the same as that in the ultraviolet ray irradiation step described above.

In the cured product forming method according to the exemplary embodiment, by repeatedly performing the step of further applying the ink and the step of irradiating the ink applied on the ink with ultraviolet rays, the thickness of the cured product to be formed can be further increased. As the thickness of the cured product increases, a larger amount of the phosphorescent pigment can be contained in the cured product. Since the surface area of the cured product can be increased, the area of the light-emitting surface in the cured product can be increased. For these reasons, the brightness of the entire cured product can be more sufficiently increased.

Conventionally, in a case where an ultraviolet curable ink containing a phosphorescent pigment is used as an inkjet ink, when an attempt is made to further suppress a decrease in the ejection stability of the ink, the concentration of the phosphorescent pigment cannot be more sufficiently increased, and it has been difficult to more sufficiently increase the brightness of the cured product. On the other hand, by performing the step of further applying the ink and the step of irradiating the ink applied onto the ink with ultraviolet rays, even when the concentration of the phosphorescent pigment in the ink is lowered, the thickness of the cured product is increased, and thus the brightness can be more sufficiently increased. Therefore, performing these steps is particularly useful in that the brightness of the cured product can be more sufficiently increased while a reduction in ejection stability is suppressed when the ink is used as an inkjet ink.

The method of further applying the ink may be the same as or different from the method of applying the ink onto the base material used in the step of applying the ink onto the base material.

### 3 Cured product

A cured product according to the present embodiment is obtained by curing the above-described ultraviolet curable ink.

The cured product can be formed by the above-described cured product forming method.

The thickness of the cured product is preferably 0.3 mm or more.

The thickness of a cured product formed with an ink containing a phosphorescent pigment may be made greater than the thickness of a cured product formed with an ink for image formation, from the viewpoint of further increasing the brightness by allowing the cured product to contain the phosphorescent pigment. However, according to the findings of the present inventors, when the thickness of the cured product is large, the yellowed portion inside the cured product is less likely to be oxidatively decomposed and less likely to disappear. Therefore, the problem of yellowing of the cured product is particularly more likely to occur when the thickness of the cured product formed from the ink containing the phosphorescent pigment is large.

On the other hand, since the above-described ultraviolet curable ink according to the embodiment can suppress the yellowing of the cured product, it is possible to suppress the yellowing while increasing the brightness of the cured product by increasing the thickness of the cured product to be formed.

The cured product preferably has a thickness of 0.3 mm or more and 2.0 mm or less, more preferably 0.5 mm or more and 1.5 mm or less, still more preferably 0.7 mm or more and 1.5 mm or less. When the thickness is 2.0mm or less, the cured product can be further inhibited from yellowing. It is considered that this is because yellowing generated in the cured product easily disappears by oxidative decomposition. Further, when it is equal to or less than 2.0mm, the brightness of the phosphorescent pigments present in the vicinity of the base material can also be made more visible, and the brightness of the entire cured product can be further increased. The thicknesses of 2.0mm or less are also preferred from the viewpoint of cost reduction and processability of the cured product. When the thickness is 0.3 mm or more, the cured product is less likely to be affected by oxygen-inhibition, and the curability of the cured product can be further enhanced.

### 4. Cured product forming apparatus

The cured product forming apparatus according to the present embodiment is a cured product forming apparatus using the above-described ultraviolet curable ink. Fig. 1 is a schematic illustration of the configuration of a cured product forming apparatus 100 according to the present embodiment.

The cured product forming apparatus 100 includes an ink storage tank 110, an ink supply channel 120, liquid feed pumps 130, an inlet-side tank 140, an ink applicator 150, an ink discharge channel 170, an outlet-side tank 170, a conveyance device 180, and an ultraviolet irradiator 190. Note that in the present embodiment, the ink applicator 150 is an inkjet head that ejects ink, but is not limited to this. In the present specification, the ink applicator 150 is hereinafter referred to as an inkjet head 150.

In the cured product forming apparatus 100, the ink contained in the ink storage tank 110 is supplied to the inlet-side tank 140 via the ink supply channel 120 by the liquid feed pump 130. Next, the ink is supplied from the inlet-side tank 140 to the inkjet head 150. Then, the ink which is not ejected from the nozzles of the inkjet head 150 is discharged to the outlet-side tank 160, and then is discharged to the ink discharge channel 170 by the liquid feeding pump 130, and the discharged ink is returned to the ink storage tank 110. Thus, the ink that has not been ejected from the inkjet head 150 can be circulated from the ink discharge channel 170 toward the ink supply channel 120 and resupplied to the inkjet head 150, to circulate the ink.

Circulating the ink in the cured product forming apparatus 100 in this manner can reduce an increase in ink viscosity in the vicinity of the nozzles due to precipitation or aggregation of the phosphorescent pigment in the ink, thereby facilitating enhancing ejection stability.

Note that in the present embodiment, the cured product forming apparatus 100 does not have to have the configuration for circulating the ink in the apparatus as illustrated in Fig. 1. Specifically, it is possible to adopt a configuration in which the ink discharge channel 170 is not provided, the ink accommodated in the ink storage tank 110 is supplied to the inkjet head 150 via the ink supply channel 120 by the liquid feed pump 130, and the supplied ink is ejected from the nozzles of the inkjet head 150.

The ink storage tank 110 is a tank for accommodating an ink to be supplied to the inkjet head 150 and an ink discharged from the inkjet head 150 without being ejected.

The ink supply channel 120 is a channel for supplying ink from the ink storage tank 110 to an ink supply port of the inkjet head 150.

The liquid feed pump 130 is disposed in each of the ink supply channel 120 and the ink discharge channel 170. As described above, the liquid feed pump 130 feeds the ink in the first tank 110 to the inlet-side tank 140, and feeds the ink discharged from the inkjet head 150 to the outlet-side tank 160. In the present embodiment, the liquid feed pump 130 can receive signals from an inlet-side tank 140 and an outlet-side tank 160 which will be described later.

The inlet side tank 140 is a tank provided with an internal pressure adjustment mechanism and an ink amount detection mechanism. With the pressure adjustment mechanism, the internal pressure of the inlet-side tank can be increased, and the ink therein can be supplied to the inkjet head 150. Furthermore, when the above-described detection mechanism detects that the amount of ink inside has become low, a signal can be sent to the liquid feed pump 130 to supply ink from the ink storage tank 110.

The outlet-side tank 160 is a tank provided with a pressure-adjusting mechanism inside the and an ink-amount detecting mechanism. Since the internal pressure of the outlet-side tank can be lowered by the pressure adjustment mechanism, the ink in the inkjet head 150 can be discharged to the outlet-side tank 160 due to a difference from the pressure in the inkjet head 150. Furthermore, when the amount of ink inside becomes large, the detection mechanism can send a signal to the liquid feed pump 130 to discharge ink to the ink storage tank 110.

The inlet-side tank 140 and the outlet-side tank 160 can appropriately adjust the ink flow in the inkjet head 150, and it is possible to further suppress entrainment of air bubbles in the nozzles.

The pressure setting values of the inlet-side tank 140 and the outlet-side tank 160 vary depending on the size and type of the inkjet head 150. For example, when KM1024aLHG RC (manufactured by Konica Minolta Inc) is used as the inkjet head, the internal pressure of the inlet-side tank 140 can be set to 5 kPa and the internal pressure of the outlet-side tank 160 can be set to -20kPa.

The inkjet head 150 has a plurality of nozzles for ejecting ink droplets onto a recording medium M, such as a sheet of paper, which is a printing medium.

The ink discharge channel 170 is a channel for discharging an ink that has not been ejected from the inkjet head 150, from an ink discharge port of the inkjet head 150.

The conveyance device 180 is a device for conveying the base material M. The conveyance device 180 includes, for example, a belt conveyor 180a and a rotatable feed roller 180b.

The ultraviolet irradiator 190 is arranged on the downstream side from the inkjet head 150 in the conveyance direction of the base material M, and emits ultraviolet rays toward the surface of the base material M on which the ultraviolet curable ink is applied. Thus, the ultraviolet irradiator 190 cures the ultraviolet curable ink.

The ultraviolet irradiator 190 is preferably an LED light source that emits ultraviolet rays having a wavelength between the peak wavelength of the absorption spectrum of the phosphorescent pigment contained in the ultraviolet curable ink and the peak wavelength of the absorption spectrum of the photopolymerization initiator contained in the ultraviolet curable ink.

When the ultraviolet curable ink is further applied onto the cured ink, the feed roller 180b of the conveyance device 180 is rotated in a direction opposite to the conveyance direction of the base material M, to return the base material M to a predetermined position. Thereafter, the feed roller 180b is rotated again in the conveyance direction to convey the base material M, and the ink is applied onto the cured ink from the inkjet head 150.

### Examples

Hereinafter, the present invention will be specifically described with reference to Examples, but the scope of the present invention is not limited to the description of Examples.

### 1. Preparation of inks 1 to 19

### (Preparation of pigment dispersion)

To prepare an ink solvent, 99.9 parts by mass of a photopolymerizable compound (dipropylene glycol diacrylate, molecular weight:242) and 0.01 parts by mass of a polymerization inhibitor (Irgastab UV-10, manufactured by BASF) were mixed and stirred for 1 hour while heating at 70°C.

then 69 parts by mass of the ink solvents prepared above, 30 parts by mass of phosphorescent pigments (G-300FF, manufactured by Nemoto & Co., Ltd), and 1 part by weight of a pigment-dispersing agent (EFKA PX4701, manufactured by BASF) are put in a polypropylene vessel together with 50 parts by mass of zirconia beads having a average particle diameter of 0.3 mm, and a dispersion treatment is performed for 30 minutes using a paint shaker, the zirconia beads were removed to prepare a pigment dispersion.

The prepared pigment dispersions were diluted with dipropylene glycol diacrylate, and the particle diameter d₅₀ of the pigments was measured using a particle size distribution analyzer (LUMiSizer, manufactured by LUM Japan Co., Ltd). The measured particle diameter d₅₀ of the pigments was 3.4 µm.

In the phosphorescent pigments used, the ratio of the emission intensity at wavelength 405 nm to the emission intensity at the maximum absorption wavelength was 0.2%, the maximum absorption wavelength of the absorbance spectrum was 325 nm, and the peak wavelength of the emission spectrum was 520 nm.

The emission intensity at a wavelength of 405 nm and the peak wavelength of the emission spectrum of the phosphorescent pigments were measured by a spectrofluorophotometer (manufactured by F -7000, manufactured by Hitachi High-Tech Corp., exciting light wavelength 360 nm)). The peak wavelength of the absorption spectrum of the phosphorescent pigment was measured with a fluorescence spectrophotometer (F-7000, manufactured by Hitachi High-Tech Corp.) .

### (Preparation of inks 1 to 13)

To 100 parts by mass of the prepared pigment dispersion, a solution prepared by dissolving 1 part by mass of a photopolymerization initiator A (Irgacure 819, manufactured by BASF) in 19 parts by mass of an ink solvent was added, and the mixture was stirred and then filtered repeatedly five times through a 40-µm polypropylene pleated filter to obtain ink 1. At this time, the concentration of the phosphorescent pigment in the ink 1 was 25% by mass, and the content of the photopolymerization initiator with respect to the mass of the photopolymerizable compound contained in the ink 1 was 1.1% by mass.

Inks 2 to 16 were obtained in the same manner as in the preparation of Ink 1, except that the composition of the solution to be added to 100 parts by mass of the pigment dispersion and the presence or absence of the addition of the polymerization inhibitor were changed as illustrated in Table 1.

### (Preparation of inks 17 and 18)

Inks 17 and 18 were obtained in the same manner as in ink 1 except that the phosphorescent pigment was changed to a white pigment (CR-52, manufactured by Ishihara Sangyo Kaisha, Ltd) and the composition of the solution to be added to 100 parts by mass of the pigment dispersion was changed as illustrated in Table 1.

Note that the following photopolymerization initiators A to H in Tables 1 and 2 were used. Note that the term "extinction coefficient (405)" described below represents an extinction coefficient of the photopolymerization initiator for light having the wavelength of 405 nm, and the term "extinction coefficient (365)" represents an extinction coefficient of the photopolymerization initiator for light having the wavelength 365 nm. Furthermore, the term "absorption wavelength" refers to the maximum absorption wavelength in the absorption spectrum of the photopolymerization initiator.
Photopolymerization initiator A: Irgacure 819 (manufactured by BASF, intramolecular cleavage-type, extinction coefficient (405): 9.0 × 10² mL/g·cm, extinction coefficient (365): 2.3 × 10³ mL/g·cm, absorption wavelength: 300nm)
Photopolymerization initiator B: Omnirad ITX (manufactured by IGM Resins, hydrogen abstraction-type, extinction coefficient (405): 1.7 × 10³ mL/g·cm, absorption wavelength: 320nm)
Photopolymerization initiator C: Omnirad TPO (manufactured by IGM Resins, intramolecular cleavage type, extinction coefficient (405): 1.6 × 10² mL/g·cm, extinction coefficient (365): 4.7 × 10³ mL/g·cm, absorption wavelength: 300nm)
Photopolymerization initiator D: Irgacure 784 (manufactured by BASF, intramolecular cleavage-type, extinction coefficient (405): 1.2 × 10³mL/g·cm absorption wavelengths: 400nm)
Photopolymerization initiator E: Irgacure 379 (manufactured by BASF, intramolecular cleavage-type, extinction coefficient (405): 2.8 × 10² mL/g·cm, absorption wavelengths: 325nm)
Photopolymerization initiator F: Irgacure 369 (manufactured by BASF, intramolecular cleavage-type, extinction coefficient (405): 2.8 × 10² mL/g·cm, absorption wavelengths: 325nm)
Photopolymerization initiator G: Irgacure 127 (manufactured by BASF, intramolecular cleavage-type, extinction coefficient (405): 7.0 mL/g·cm, extinction coefficient (365): 1.1 × 10³ mL/g·cm, absorption wavelength: 260nm)
Photopolymerization initiator H: Omnirad MBF (manufactured by IGM Resins, hydrogen abstraction-type, extinction coefficient (405): less than 0.1mL/g·cm, absorption wavelengths: 260nm)
Photopolymerization initiator I: Irgacure 907 (manufactured by BASF, intramolecular cleavage-type, extinction coefficient (405): less than 0.1 mL/g·cm, extinction coefficient (365): 4.7 × 10² mL/g·cm, absorption wavelength 300 nm)

The extinction coefficient (405) and the extinction coefficient (365) of the photopolymerization initiator used in each ink were determined by diluting the photopolymerization initiator with methanol to a concentration of 0.1% by mass, and then measuring the resulting diluted solution using a spectrophotometer (V650, manufactured by JASCO Corporation).

**[Table 1]**

| Ink No | 1 | 2 | 3 | 4 | 5 | 6 | 7 | 8 | 9 | 10 |
|---|---|---|---|---|---|---|---|---|---|---|
| Photopolymerization initiator | Photopolymerization initiator A 1 parts by mass | Photopolymerization initiator A 1 parts by mass | Photo-polymerizatio a initiator A 0.4 parts by mass | Photopolymerization initiator A 1.3 parts by mass | Photopolymerization initiator B 1 parts by mass | Photo-polymerizatio n initiator C 1 parts by mass | Photopolymerization initiator C 1.3 parts by mass | Photopolymerization initiator D 1 parts by mass | **Photo-**polymerizatio n initiator E 1 parts by mass | Photopolymerization initiator F 1 parts by mass |
| Ink solvent | 19 parts by mass | 19 parts by mass | 19.6 parts by mass | 18.7 parts by mass | 19 parts by mass | 19 parts by mass | 18.7 parts by mass | 19 parts by mass | 19 parts by mass | 19 parts by mass |
| Polymerization inhibitor | Yes | No | Yes | Yes | Yes | Yes | Yes | Yes | Yes | Yes |

**[Table 2]**

| Ink No | 11 | 12 | 13 | 14 | 15 | 16 | 17 | 18 |
|---|---|---|---|---|---|---|---|---|
| Photopolymerization initiator | Photopolymerization initiator A 3 parts by mass | Photopolymerization initiator A 3 parts by mass | Photo-polymerization initiator A 1.7 parts by mass | Photopolymerization initiator G 1 parts by mass | Photopolymerization initiator H 1 parts by mass | Photopolymerization initiator I 1 parts by mass | Photopolymerization initiator A 3 parts by mass | Photopolymerization initiator A 4.6 parts by mass |
| Ink solvent | 17 parts by mass | 17 parts by mass | 18.3 parts by mass | 19 parts by mass | 19 parts by mass | 19 parts by mass | 17 parts by mass | 15.4 parts by mass |
| Polymerization inhibitor | Yes | No | Yes | Yes | Yes | Yes | Yes | Yes |

### 2. Formation of cured product

A circulation type inkjet head (KM1024aLHG -RC, manufactured by Konica Minolta Inc) was filled with the prepared ink 1, and the ink 1 was applied onto a white acrylic plate under the conditions of a resolving power of 720dpi, a droplet ejection amount of 140pL (20pL × 7 ejection), and a conveyance speed of 176 mm/s. Then, the applied ink was irradiated with ultraviolet rays using a UV source (H-HOYA, manufactured by LSC03 Co., Ltd., wavelength 405 nm) by adjusting with an illumination meter so that the illumination became 1 W/cm² when the ink passed through a lamp at a conveyance speed of 176 mm/s, and the ink was cured for 0.14 seconds. The intensity of the ultraviolet rays was measured using an illuminometer (C9536 02, manufactured by Hamamatsu Photonics K.K).

The ink 1 was further applied onto the cured ink under the same conditions, and the applied ink 1 was irradiated with ultraviolet rays under the same conditions to cure the ink. This operation was repeated to form a 0.3 mm thick cured product 1.

Cured products 2 to 27 were obtained in the same manner as for the cured product 1, except that the type of ink used, the wavelength of the ultraviolet ray, and the thickness of the cured product were changed as indicated in Tables 1 and 2. Note that the thickness of the cured product was adjusted by changing the number of times of repetition of the operation of application of the ink and curing of the ink. The wavelengths of the ultraviolet rays illustrated in Tables 1 and 2 were adjusted by changing the type of the UV light source to those illustrated below.
Wavelength 365 nm, UV light source (FireJetFJ100 225* 20AC 365-6 W, PHOSEON)
Wavelength 395 nm, UV light source (FireJetFJ100 225* 20AC 395-12 W, PHOSEON)

### 3. Evaluation

### (Brightness)

Each of the cured products 1 to 27 was irradiated with a white-light fluorescent light in 200 lx for 20 minutes, and the brightness 10 minutes after the irradiation was measured using a brightness meter (LS 110, manufactured by Konica Minolta, Inc). Based on the measured brightness values, brightness evaluation was performed according to the following criteria. Note that when the curability evaluation described below was ××, UV irradiation was further performed to cure the composition until the brightness could be measured.
⊚: 0.20 cd/m² or more
o: 0.15 cd/m² or more and less than 0.20 cd/m²
△: 0.10 cd/m² or more and less than 0.15 cd/m²
×: 0.10cd/m² or less

### (Yellowing)

The appearances of the cured products 1 to 27 were visually observed and evaluated according to the following criteria.
⊚: No yellowing observed
o: Slight yellowing was observed in some portions
△: It was confirmed that the whole cured product was colored pale yellow.
×: It was confirmed that the whole cured product was colored a deep yellow
××: It was confirmed that the whole cured product was colored a deeper yellow

### (Curability)

The cured products 1 to 27 were allowed to stand for 3 minutes after formation, and then the cured products were palpated to evaluate the curability according to the following criteria.
⊚: Ink is sufficiently cured and tackiness (stickiness) is not confirmed
∘: Cured product is slightly tacky (sticky) and there are a few portions that are not fully cured
△: Cured product has tackiness (stickiness) and has many insufficiently cured portions
×: When cured product is rubbed with a finger, it peels off from the acrylic plate.
××: Ink is not fully cured as a whole

Tables 3 to 5 show the results of the evaluations.

**[Table 3]**

| Cured product No | | 1 | 2 | 3 | 4 | 5 | 6 | 7 | 8 | 9 |
|---|---|---|---|---|---|---|---|---|---|---|
| Ink No | | 1 | | | | 6 | 6 | 14 | | 16 |
| Photopolymerization initiator | | A | | | | C | C | G | | I |
| Photopolymerization initiator/photopolymerizable compound [%] | | 1.1 | | | | 1.1 | 1.1 | 1.1 | | 1.1 |
| Extinction coefficient of photoinitiator (405) [mL/g·cm] | | 9.0×10² | | | | 1.6×10² | 1.6×10² | 7.0 | | Less than 1.0 |
| Extinction coefficient of photoinitiator (365) [mL/g·cm] | | 2.3×10³ | | | | 4.7×10² | 4.7×10² | 1.1×10² | | 4.7×10² |
| Absorption wavelength of photopolymerization initiator [nm] | | 300 | | | | 300 | 300 | 260 | | 300 |
| Thickness of cured product [mm] | | 0.3 | 1.0 | 1.0 | 1.0 | 1.0 | 1.0 | 1.0 | | 1.0 |
| UV wavelength [nm] | | 405 | 405 | 395 | 365 | 405 | 365 | 405 | 365 | 365 |
| Evaluation | Brightness | △ | ○ | ○ | ○ | ○ | ○ | ⊚ | ⊚ | ○ |
| | Yellowing | ⊚ | ○ | ○ | ○ | ○ | ○ | ⊚ | ⊚ | ○ |
| | Curability | △ | ○ | ○ | ○ | △ | △ | ×× | ×× | ×× |

**[Table 4]**

| Cured product No | | 10 | 11 | 12 | 13 | 14 | 15 | 16 | 17 |
|---|---|---|---|---|---|---|---|---|---|
| Ink No | | 2 | 3 | 4 | 5 | 7 | 8 | 9 | 10 |
| Photopolymerization initiator | | A | A | A | B | C | D | E | F |
| Photopolymerization initiator/photopolymerizable compound [%] | | 1.1 | 0.5 | 1.5 | 1.1 | 1.5 | 1.1 | 1.1 | 1.1 |
| Extinction coefficient of photoinitiator (405) [mL/g·cm] | | 9.0×10² | 9.0×10² | 9.0×10² | 1.7×10³ | 1.6×10² | 1.2×10³ | 2.8×10² | 2.8×10² |
| Absorption wavelength of photopolymerization initiator [nm] | | 370 | 300 | 300 | 320 | 300 | 400 | 325 | 325 |
| Thickness of cured product [mm] | | 1.0 | 1.0 | 1.0 | 1.0 | 1.0 | 1.0 | 1.0 | 1.0 |
| UV wavelength [nm] | | 405 | 405 | 405 | 405 | 405 | 405 | 405 | 405 |
| Evaluation | Brightness | ○ | ⊚ | △ | △ | △ | ○ | △ | △ |
| | Yellowing | ○ | ⊚ | △ | △ | △ | ○ | △ | △ |
| | Curability | ○ | △ | ○ | △ | △ | ○ | △ | △ |

**[Table 5]**

| Cured product No | | 18 | 19 | 20 | 21 | 22 | 23 | 24 | 2 5 | 26 | 27 |
|---|---|---|---|---|---|---|---|---|---|---|---|
| Ink No | | 11 | | | | 12 | 13 | 15 | | 17 | 18 |
| Photopolymerization initiator | | A | | | | A | A | H | | A | A |
| Photopolymerization initiator/photopolymerizable compound [%] | | 3.5 | | | | 3.5 | 1.9 | 1.1 | | 3.5 | 5.5 |
| Extinction coefficient of photoinitiator (405) [mL/g·cm] | | 9.0×10² | | | | 9.0×10² | 9.0×10² | Less than 1.0 | | 9.0×10² | 9.0×10² |
| Absorption wavelength of photopolymerization initiator [nm] | | 300 | | | | 300 | 300 | 260 | | 300 | 300 |
| Thickness of cured product [mm] | | 0.3 | 1.0 | | | 1.0 | 1.0 | 1.0 | | 0.3 | 0.3 |
| UV wavelength [nm] | | 405 | 405 | 395 | 365 | 405 | 405 | 405 | 3 6 5 | 405 | 405 |
| Evaluation | Brightness | × | × | × | × | × | × | ⊚ | ⊚ | - | - |
| | Yellowing | △ | ×× | ×× | ×× | × | × | ⊚ | ⊚ | ⊚ | ○ |
| | Curability | ○ | ○ | ○ | ○ | ○ | ○ | ×× | × × | × | △ |

In the cured products 1 to 17, since the phosphorescent pigments having the emission spectra at the wavelength of 405 nm and the photopolymerization initiators having the extinction coefficients of light at the wavelengths 405 nm of 100 mL/g·cm or more were used, it was possible to suppress a decrease in the curability while suppressing the yellowness and brightness of the cured products. It is considered that this is because while the photopolymerization initiator absorbs ultraviolet rays with which the ink is irradiated to cure the ink, the phosphorescent pigment absorbs the ultraviolet rays to emit light, and thus the remaining photopolymerization initiator absorbs the light emission to further cure the ink, so that even when the addition amount of the photopolymerization initiator is small, a decrease in curability can be suppressed. In addition, it is considered that since the addition amount of the photopolymerization initiator could be reduced, yellowing and a decrease in brightness could be suppressed.

The cured product 2, which had a greater thickness than the cured product 1, had satisfactory evaluations of the brightness and the curability of the cured product. It is considered that this is because since the thickness became larger, more of the phosphorescent pigment could be contained in the cured product, and therefore, the brightness further increased. In addition, it is considered that since the thickness became larger, the film became less likely to be influenced by oxygen inhibition and the curability became higher.

The cured product 2 had better curability than the cured product 11 and had better evaluations of yellowing and brightness than the cured product 12. It is thought that when the amount of the photopolymerization initiator is 0.7% by mass or more, the polymerization reaction can be sufficiently initiated to further increase the curability, and when the amount is 1.3% by mass or less, yellowing derived from the photopolymerization initiator can be further suppressed to further suppress a decrease in the brightness.

On the other hand, in the cured products 18 to 23 in which the content of the photopolymerization initiator with respect to the mass of the photopolymerizable compound was more than 1.5 mass%, the evaluations of yellowing and brightness were low. The cured products 7 to 9, 24, and 25 in which the light extinction coefficient of the photopolymerization initiator was less than 100 mL/g·cm had lower curability while having increased brightness. It is thought that this is because the residue of the photopolymerization initiator having an extinction coefficient of less than 100 mL/g·cm more easily absorbs wavelengths shorter than wavelengths of ultraviolet rays, and the complementary yellow color is less likely to be visually recognized.

Even when the content of the photopolymerization initiator exceeded 1.5% by mass in the cured products 26 and 27 in which the white pigment was used instead of the phosphorescent pigment, yellowing was hardly confirmed, and this is considered to be because the coloring by the white pigment could conceal the yellowing of the cured products.

This application claims the benefit of Japanese Patent Application No. 2022-087969 filed on May 30, 2022. The contents described in the specification of the application and the drawings are all incorporated in the description of the present application.

### Industrial Applicability

The present invention can suppress a decrease in curability while suppressing yellowing and a decrease in brightness of a cured product formed by an ink containing a phosphorescent pigment. Therefore, the present invention is useful, for example, for producing outdoor signboards and the like.

### Reference Signs List

100 Cured product forming apparatus
110 Ink storage tank
120 Ink supply channel
130 Liquid feed pump
140 Inkjet head
150 Ink discharge channel
160 Conveyance device
170 Ultraviolet irradiator

## Claims

1. An ultraviolet curable ink, comprising:
a photopolymerizable compound;
a phosphorescent pigment that emits light having a wavelength of 405 nm; and
a photopolymerization initiator having an extinction coefficient of 100 mL/g·cm or more for the light having the wavelength of 405 nm, wherein
a content of the photopolymerization initiator is 0.1% by mass or more and 1.5% by mass or less based on a total mass of the photopolymerizable compound.

2. The ultraviolet curable ink according to claim 1, wherein the ultraviolet curable ink is an inkjet ink.

3. The ultraviolet curable ink according to claim 1 or 2, further comprising a polymerization inhibitor.

4. The ultraviolet curable ink according to claim 1 or 2, wherein the phosphorescent pigment has a particle diameter (d₅₀), at which a cumulative value in a volume-based particle diameter distribution, of 1 µm or more and 10 µm or less is 50%.

5. The ultraviolet curable ink according to claim 1 or 2, wherein a content of the phosphorescent pigment is less than 50% by mass based on a total mass of the ultraviolet curable ink.

6. The ultraviolet curable ink according to claim 1 or 2, wherein the phosphorescent pigment is a phosphorescent pigment in which strontium aluminate is activated with an activator.

7. The ultraviolet curable ink according to claim 1 or 2, wherein the photopolymerization initiator is an intramolecular cleavage-type photopolymerization initiator.

8. The ultraviolet curable ink according to claim 1 or 2, wherein the extinction coefficient of the photopolymerization initiator is 500 mL/g·cm or more.

9. A method for forming a cured product, the method comprising:
applying the ultraviolet curable ink according to claim 1 or 2 onto a base material; and
irradiating the applied ultraviolet curable ink with an ultraviolet ray.

10. The method according to claim 9, further comprising:
further applying the ultraviolet curable ink onto the ultraviolet curable ink having been irradiated with the ultraviolet ray; and
irradiating the further applied ultraviolet curable ink with the ultraviolet ray.

11. The method according to claim 9, wherein
in the applying the ultraviolet curable ink onto the base material, the ultraviolet curable ink is ejected from a nozzle of an inkjet head to apply the ultraviolet curable ink onto the base material; and
the method further comprises:
discharging, from the inkjet head, the ultraviolet curable ink that has not been ejected from the nozzle of the inkjet head, and
resupplying the discharged ultraviolet curable ink to the inkjet head.

12. A cured product obtained by curing the ultraviolet curable ink according to claim 1 or 2.

13. The cured product according to claim 12, wherein the cured product has a thickness of 0.3 mm or more.

14. An apparatus for forming a cured product, the apparatus comprising:
an ink applicator that applies the ultraviolet curable ink according to claim 1 or 2 onto a base material; and
an LED light source that irradiates the ultraviolet curable ink with an ultraviolet ray.

15. The apparatus according to claim 14, wherein:
the ink applicator is an inkjet head that ejects the ultraviolet curable ink; and
the ultraviolet curable ink that has not been ejected from the inkjet head is discharged from the inkjet head, and the discharged ultraviolet curable ink is resupplied to the inkjet head.
